(19) Europäisches Patentamt
European Patent Office
Office européen des brevets

(11) **EP 4 307 633 B1**

(12) **EUROPEAN PATENT SPECIFICATION**

(45) Date of publication and mention
of the grant of the patent:
**13.05.2026   Bulletin 2026/20**

(21) Application number: **22184576.1**

(22) Date of filing: **13.07.2022**

(51) International Patent Classification (IPC):
**H04L 41/16** (2022.01)   **H04L 41/142** (2022.01)
**H04L 43/067** (2022.01)   **G06N 5/045** (2023.01)
**G06N 20/00** (2019.01)   H04L 41/147 (2022.01)
**H04L 43/16** (2022.01)

(52) Cooperative Patent Classification (CPC):
**H04L 41/16; G06N 5/045; G06N 20/00;**
**H04L 41/142; H04L 43/067;** H04L 41/147;
H04L 43/16

(54) **DETERMINING TRENDS OF A TIME SERIES**

BESTIMMUNG DER TRENDS EINER ZEITREIHE

DÉTERMINATION DES TENDANCES D'UNE SÉRIE TEMPORELLE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**17.01.2024   Bulletin 2024/03**

(73) Proprietor: **Skyline Communications NV**
**8870 Izegem (BE)**

(72) Inventors:
• **Ledoux, Veerle**
**8570 Vichte (BE)**
• **Dreesen, Dennis**
**8870 Izegem (BE)**

(74) Representative: **Ipsilon Belgium**
**Bellevue 5/501**
**9050 Gent-Ledeberg (BE)**

(56) References cited:
**EP-A1- 3 401 789**      **US-A1- 2021 081 492**
**US-A1- 2021 326 235**

• **HOU MIN MINHO@MAIL USTC EDU CN ET AL:**
**"Multi-Granularity Residual Learning with**
**Confidence Estimation for Time Series**
**Prediction", PROCEEDINGS OF THE GENETIC**
**AND EVOLUTIONARY COMPUTATION**
**CONFERENCE, ACMPUB27, NEW YORK, NY,**
**USA, 25 April 2022 (2022-04-25), pages 112 - 121,**
**XP058918724, ISBN: 978-1-4503-9268-6, DOI:**
**10.1145/3485447.3512056**
• **LIU ZHENYU ET AL: "Forecast Methods for Time**
**Series Data: A Survey", IEEE ACCESS, IEEE,**
**USA, vol. 9, 21 June 2021 (2021-06-21), pages**
**91896 - 91912, XP011863046, DOI: 10.1109/**
**ACCESS.2021.3091162**

**Description**

**Field of the Invention**

The present invention generally relates to, amongst others, forecasting time series.

**Background of the Invention**

Time series forecasting aims to predict future values of a time series, e.g. in monitoring network devices in a telecommunication network. Hereto, a prediction model can be trained on a substantial amount of previous time series values, e.g. by means of machine learning.

These prediction models are often trained for a specific time series and a single time resolution, which limits the range of observable temporal patterns in the forecast. Additionally, training a prediction model is typically performed offline and is resource intensive, e.g. uses substantial processing power, a large memory footprint, and long training cycles. As such, when forecasting a plurality of time series, in particular time series with different behaviours, it is expensive and inefficient to train a prediction model for every time series at different time resolutions. It is thus a problem to forecast different temporal patterns for a plurality of time series with limited computational resources, i.e. the scalability of existing solutions is a problem.

EP 3401789 A1 discloses a method for detection of anomalies in a time series comprising: a) obtaining a next value of the time series; b) updating a plurality of derived time series thereby obtaining a next derived value; c) predicting a future derived value of the derived time series and a confidence indicator; d) retrieving, a previously predicted derived value and a confidence indicator of the previously predicted derived value as a prediction of the next derived value; e) detecting a change point when the difference between the next derived value and the previously predicted derived value is larger than indicated by the confidence indicator of the previously predicted derived value; f) detecting an anomaly in the time series based on the detection of one or more change points at the one or more resolutions of the derived time series.

**Summary of the Invention**

It is an object of the present invention, amongst others, to solve or alleviate the above identified challenges and problems by improving online forecasting of time series.

According to a first aspect, this object is achieved by a computer implemented method as set out in claim 1.

The respective granularity periods in the set of increasing granularity periods comprise a predetermined number of consecutive values, i.e. have a distinct length. The distinct length of the respective granularity periods may be a multiple of the length of the smallest granularity period. The consecutive values of the time series may be raw data, e.g. a polled metric in a telecommunications network. Alternatively, the consecutive values may be pre-processed or aggregated raw data.

An aggregated value of the consecutive values in a respective granularity period is determined upon ending of the respective granularity period, i.e. when a next value of the time series is obtained thereby completing the period. The aggregated value may for example be a mean, a cumulative sum, a median, or any other statistical representation of consecutive values in the respective granularity period. The aggregated value for a larger granularity period may be determined based on aggregated values for a smaller granularity period, as the larger granularity period includes the consecutive values of the smaller granularity period. This allows to keep a limited amount of values in memory, i.e. the preceding aggregated value for the respective granularity periods.

The slope estimations may express a change in the consecutive values over a respective granularity period. The slope estimation for a respective granularity period may be updated based on a weighted sum of the difference value, i.e. a recent change in the time series, and the preceding slope estimation, i.e. previous behaviour of the time series. Herein, the weights may be based on the first smoothing factor. The first smoothing factor may have a fixed or variable value that results in a relatively stable slope estimation by assigning more weight to the most recent slope estimation. The slope estimations may be updated for each granularity period in the set of granularity periods. Alternatively, the slope estimations may be updated for a portion of the granularity periods in the set of granularity periods thereby allowing to reduce the consumed computational resources.

Updating slope estimations for the respective granularity periods allows to forecast or predict different temporal patterns of the time series at different prediction horizons without keeping a large amount of consecutive values in memory. The aggregated values for the respective granularity periods allow to use a single smoothing factor for updating the slope estimations for the respective granularity periods, further limiting memory usage.

It is an advantage that the determining of trends of a time series can be performed online and is scalable to a plurality of time series, as limited computational resources are consumed. It is a further advantage that the memory footprint is fixed, known in advance, and independent of the time series. It is a further advantage that trends in any time series can be determined. It is a further advantage that trends can be determined in a plurality of time series with substantially different behaviours. It is a further advantage that the time to process a next update of the slope estimation can be assessed in advance as the time to update a respective slope estimation is constant. It is a further advantage that the determined trends adapt to new behaviour of the time series without time-consuming and resource-intensive training cycles and/or parameter tuning.

According to an embodiment, the computer implemented method can further comprise, for respective granularity periods, extrapolating the aggregated value a number of granularity periods in time based on the slope estimation.

By the increasing length of the respective granularity periods, a larger granularity period allows to extrapolate the aggregated value further in time compared to a smaller granularity period. As such, the respective granularity periods allow to predict a future value of the time series at different prediction horizons.

According to an embodiment, the computer implemented method can further comprise detecting an alarm candidate for a respective granularity period if the slope estimation and/or the extrapolated aggregated value violates an alarm threshold.

Larger granularity periods may allow early detection of alarm candidates, while smaller granularity periods may allow more accurate detection of alarm candidates as they approach. This has the advantage that a future critical event in a time series can be detected early and can be monitored with increasingly precise predictions as the critical event approaches. Detecting an alarm candidate may trigger an alert, e.g. a notification message that is sent to a user or operator. Alternatively or complementary, detecting an alarm candidate may trigger one or more additional steps to further monitor the alarm candidate, e.g. alarm analytics, severity analysis, or additional forecasting of the time series.

According to an embodiment, extrapolating the aggregated value for respective granularity periods can further comprise determining a confidence band of the extrapolation based on the slope estimation and a slope deviation indicative for the stability of the time series.

In other words, a respective confidence band may be determined for the extrapolations of the respective granularity periods. A confidence band provides a measure of confidence in the determined trend of the time series. The slope deviation for a respective granularity period may be indicative of fluctuations or variations of the aggregated values for a respective granularity period, i.e. to which extend the more recent aggregated values vary substantially from preceding aggregated values.

According to an embodiment, the computer implemented method can further comprise determining the slope deviation based on a preceding slope deviation, a second smoothing factor derived from the first smoothing factor, the slope estimation, and an adaptive slope estimation indicative for the contribution of the recent time series values to the trend of the time series.

The slope deviation for a respective granularity period may be determined based on a weighted sum of the difference between the slope estimation and the adaptive slope estimation, and the preceding slope deviation. Herein the weights of the weighted sum may be based on the second smoothing factor. As the second smoothing factor can be derived from the first smoothing factor, memory usage may further be limited by only keeping the first smoothing factor in memory. The second smoothing factor may be substantially larger than the first smoothing factor.

According to an embodiment, the computer implemented method can further comprise determining the adaptive slope estimation based on the difference value, a preceding adaptive slope estimation, and a third smoothing factor derived from the first smoothing factor.

The adaptive slope estimation for a respective granularity period may be determined based on a weighted sum of the difference value and the preceding adaptive slope estimation for the respective granularity period. Herein, the weights may be based on the third smoothing factor. The third smoothing factor may be substantially larger than the first smoothing factor such that the adaptive slope estimation assigns more weight to the difference value compared to the slope estimation, i.e. biases recent changes in the time series. As the third smoothing factor can be derived from the first smoothing factor, memory usage may further be limited by only keeping the first smoothing factor in memory.

According to an embodiment, the computer implemented method can further comprise detecting an alarm candidate for a respective granularity period if the confidence band violates an alarm threshold.

In doing so, excessive alarm candidates can be avoided as alarm candidates are only detected when it is sufficiently certain that a determined trend will violate the alarm threshold. This has the further advantage that alerting fatigue can be avoided, e.g. with an operator or user receiving notifications of the alarm candidates. It is a further advantage that superfluous triggering of one or more additional steps to monitor the alarm candidate can be avoided.

According to an embodiment, the computer implemented method may further comprise initializing the slope estimation by, during an initialization period, performing the updating of the slope estimation with less smoothening than with the first smoothing factor.

To this end, the slope estimation may temporarily be updated with an adapted first smoothing factor that assigns more weight to the difference value during the initialization period. This allows the initial slope estimation to adapt relatively fast and converge to a sufficiently good slope estimation within an acceptable time. During the initialization period, the first smoothing factor may have a fixed value or may have a value that evolves in time, e.g. decreasing in time as the slope estimation approaches a sufficiently good estimate.

This has the further advantage that the initializing can be performed in a streaming fashion, i.e. online, without loading historical time series values into memory. The detection of alarm candidates may further be supressed until the initialization period is completed as the determined trends are not yet sufficiently reliable. Alternatively, an offline initialization procedure may be performed where a short history of historical time series values are loaded into memory.

According to an embodiment, the computer implemented method can further comprise initializing the slope deviation and the adaptive slope estimation by, during an initialization period, performing the determining of the slope deviation with less smoothening than with the second smoothing factor, and performing the determining of the adaptive slope estimation with less smoothening than with the third smoothing factor.

To this end, the slope deviation may temporarily be determined with an adapted second smoothing factor that assigns more weight to the difference between the slope estimation and the adaptive slope estimation during the initialization period. The adaptive slope estimation may temporarily be determined with an adapted third smoothing factor that assigns more weight to the difference value during the initialization period. This allows faster online learning towards a sufficiently good slope deviation and adaptive slope estimation. This has the further advantage that the initializing can be performed in a streaming fashion, i.e. online, without loading historical time series values into memory. During this initialization period, the adapted smoothing factors may have a fixed value or may have a value that evolves in time, e.g. increases or decreases as the adaptive slope estimation and slope deviation approach a sufficiently good estimate. The detection of alarm candidates may further be supressed until the initialization period is completed as the determined trends are not yet sufficiently reliable. Alternatively, an offline initialization procedure may be performed where a short history of historical time series values are loaded into memory.

According to an embodiment, the computer implemented method may further comprise skipping the updating of the slope estimation for a respective granularity period if at least one consecutive value of the time series is missing within the respective granularity period.

In doing so, an unwarranted substantial change in the determined trends for the respective granularity periods can be avoided. It is a further advantage that this makes the determined trends more reliable and more robust.

According to an embodiment, the computer implemented method can further comprise performing the updating of the slope estimation for a respective granularity period with more smoothening than with the first smoothing factor if the difference value is an outlier.

Outliers may result in a large difference value that can disturb the determined trends substantially by excessively updating the slope estimation. As such, updating the slope estimation with higher smoothening can improve the stability and reliability of the determined trends. The value of the smoothing factor may be based on the magnitude of the outlier, resulting in more smoothening for more extreme outliers. Upon detecting a plurality of successive outlier values, the initialization period can further be repeated to recalibrate the slope estimation, the adaptive slope estimation, and/or the slope deviation. This has the further advantage that the determined trends can adapt to substantially new behaviour of the time series, i.e. a change in time series behaviour.

According to an embodiment, the computer implemented method may further comprise, upon detecting an alarm candidate for a respective granularity period, training one or more prediction models based on previous stored time series values.

In other words, detecting an alarm candidate based on the online trend determining may trigger an offline generation or training of one or more prediction models. Such a prediction model may forecast or predict the time series more accurately compared to the online determined trends at the cost of additional computational resources. It is thus a further advantage that these more expensive prediction models are only obtained when an alarm candidate is detected and are not continuously kept in memory.

According to an embodiment, training the one or more prediction models may further comprise i) retrieving stored time series values having a time resolution comparable to the respective granularity period of the detected alarm candidate; ii) dividing the retrieved time series values in a training set and a test set; iii) training one or more prediction models based on the training set; and iv) selecting a prediction model from the one or more trained prediction models that predicts the test set with the smallest error.

Previous time series values may be stored at different time resolutions. These different time resolutions may correspond with the respective granularity periods. Alternatively, these different time resolutions may not correspond with the respective granularity periods. As such, the time resolution of the retrieved time series values may be aggregated to the respective granularity period for which the alarm candidate is detected. Aggregating time series values has the further advantage that some noise may be removed and the training time may be reduced.

Training the one or more prediction models may further comprise additional pre-processing of the retrieved time series values, e.g. removing outliers, detecting missing values, and/or detecting seasonality. Training of one or more prediction models may further be performed in parallel, i.e. substantially simultaneously. Preferably, a plurality of prediction models may be trained, wherein the respective prediction models are based on different modelling techniques. This has the further advantage that the modelling technique that is most suitable for predicting the current time series can be obtained.

According to an embodiment, the one or more trained prediction models are based on a Holt-Winters model or an autoregressive model.

According to an embodiment, the computer implemented method may further comprise verifying the detected alarm candidate by predicting the time series values in time based on the one or more prediction models.

The one or more prediction models may thus verify the alarm candidate detected by the online determined trends. Additionally, the one or more prediction models may determine a time interval during which the alarm candidate is expected to occur.

According to a second aspect, the invention relates to a data processing system , as set out in claim 13, configured to perform the computer implemented method according to the first aspect.

According to a third aspect, the invention relates to a computer program **,** as set out in claim 14, comprising instructions which, when the program is executed by a computer, cause the computer to perform the computer implemented method according to the first aspect.

According to a fourth aspect, the invention relates to a computer-readable medium **,** as set out in claim 15, comprising instructions which, when executed by a computer, cause the computer to perform the computer implemented method according to the first aspect.

## Brief Description of the Drawings

Fig. 1 shows a schematic representation of a telecommunications network and a time series of a metric related to the network according to an example embodiment;

Fig. 2 shows steps of a computer implemented method for determining trends of a time series, according to an embodiment;

Fig. 3 shows steps of a computer implemented method for determining a confidence band of an extrapolation for respective granularity periods, according to an embodiment;

Fig. 4 shows steps of a computer implemented method to determine the values of the smoothing factors, according to an embodiment;

Fig. 5 shows steps of a computer implemented method for training one or more prediction models to verify a detected alarm candidate, according to an embodiment; and

Fig. 6 shows an example embodiment of a suitable computing system for performing steps according to example aspects of the disclosure.

## Detailed Description of Embodiment(s)

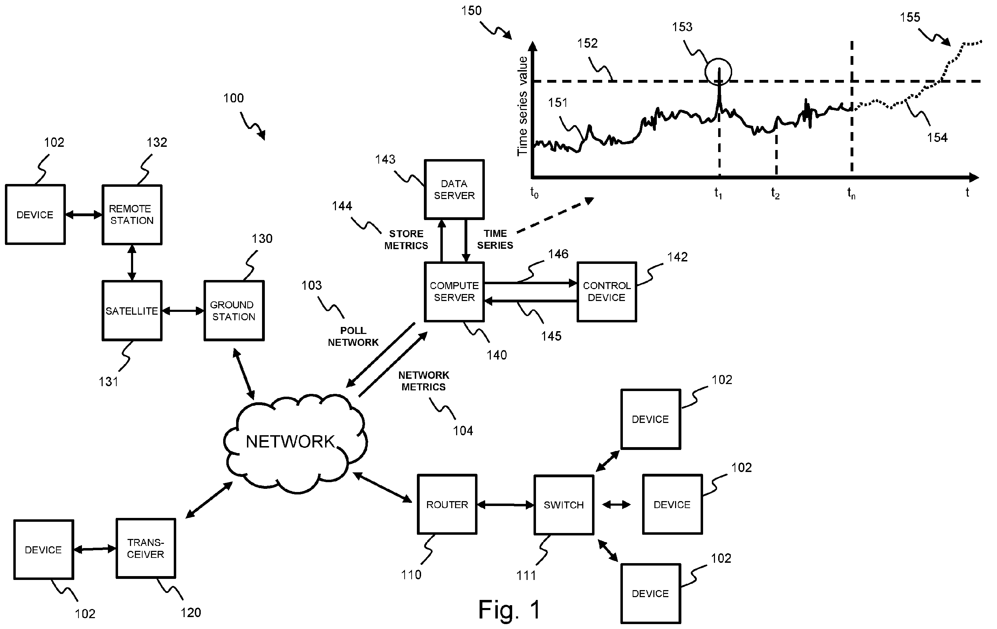

Fig. 1 shows a schematic representation of a telecommunications network 100. The telecommunications network 100 can comprise a plurality of nodes 102, 110, 111, 120, 130, 131, 132, 140, i.e. telecommunications equipment, that are interconnected for exchanging data. A node can be a redistribution point such as for example, amongst others, a router 110, a switch 111, a transceiver 120, a satellite ground station 130, a satellite 131, or a remote satellite station 132. A node can also be an endpoint such as a client device 102, e.g. a desktop, a laptop, a smartphone, a television, or a tablet.

The operation of each node 102, 110, 111, 120, 130, 131, 132, 140 in the network 100 can be characterized by one or more parameters, i.e. network metrics. Such network metrics can for example be indicative for, amongst others, an operational state of a node or a connection state of a node. Network metrics can for example be, amongst others, node activity, signal strength, signal to noise ratio, latency, jitter, packet loss, throughput, packet duplication, uptime, CPU utilization, memory interface, or any other network metric known to the skilled person.

These network metrics can be polled 103 at regular time intervals, i.e. at a polling frequency, or at irregular time intervals, e.g. triggered by an event. The network polling may, for example, be performed by a computer program running on a compute server 140 connected to the network 100. The polled network metrics 104 can be stored 144 in a secondary memory or storage medium such as, for example, a database server 143 or a network attached storage, NAS. By polling the network 100 in time, a time series 150 is obtained for every network metric 104 having a time resolution corresponding with the polling frequency. A time series 150 is a sequence of data points or values, e.g. network metric 151, indexed in time order. As a telecommunications network 100 typically includes a substantial amount of nodes, and each node is typically characterized by a plurality of network metrics, polling 103 the network will result in a large amount of time series 150.

A control device 142 such as a desktop or a laptop can further provide an application and/or user interface to control 145 the network polling 103. The control device 142 may be included in a network management system configured to monitor 146 network 100 based on the polled network metrics 104. Amongst others, such a network management system may offer a user or operator the functionality to set and configure alarm thresholds 152 and rules for certain network metrics 104. When a polled network metric such as metric 151 violates the set alarm threshold 152 or satisfies the set alarm rule, e.g. when a utilization metric reaches 95%, the operator may be alerted. Configuring appropriate alarm thresholds 152 in which early detection of problems in the network 100 is balanced with excessive alarms can be a challenge as the operator is only alerted upon violation of the alarm threshold 152. For example, a short-lived peak 153 in the polled metric 151 that exceeds an alarm threshold 152 might be no problem, resulting in a superfluous alert. On the other hand, exceeding the same alarm threshold 152 for a prolonged time 155 might result in critical network problems.

As such, it can be desirable to determine or predict future values 154 of the time series 150 while network metrics are being obtained, i.e. while the network is being polled 103. In other words, it is desirable to predict future threshold breaches in the network 100 before they occur. Additionally, the time series may behave substantially different at different time resolutions. For example, time series 150 may appear to decrease when considering time period $[t_1, t_2]$, while the global trend of the time series 150, i.e. during time period $[t_0, t_n]$, is increasing. It is thus desirable to predict trends of the time series 150 at different time resolutions. The description below describes a computer implemented method for determining such trends of a time series with limited computational resources.

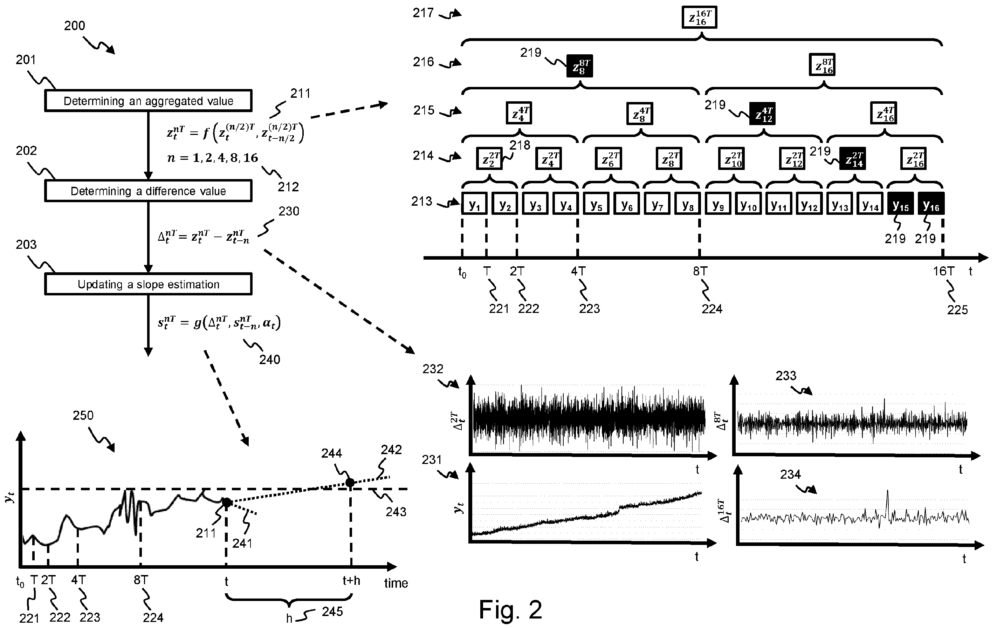

Fig. 2 shows steps 200 according to a computer implemented method for determining trends 241, 242 of a time series 250. The time series 250 may, for example, be obtained by polling a metric of a network device as described above. The time series 250 has consecutive values $[y_1, y_2, ..., y_n]$ 213 at an initial time resolution 221. The initial time resolution 221, i.e. the elapsed time between two consecutive values 213, may be defined by the polling frequency of the time series metric, e.g. 12 Hz. In other words, the consecutive values 213 of time series 250 may represent the raw data obtained by polling a network device.

Alternatively, the consecutive values 213 may be pre-processed or aggregated raw data, e.g. each consecutive value 213 may aggregate 5 minutes of raw polled data. As such, the initial time resolution 221 may be an aggregation of higher time resolutions, e.g. the polling frequency. This has the further advantage that noise in high-frequency data can be reduced. It is a further advantage that this allows to aggregate raw data to a time series 250 with equidistant time intervals, even when the raw polled data has irregular time intervals.

The initial time resolution 221 defines a smallest granularity period T of a set of increasing granularity periods, e.g. $[T, 2T, 4T, 8T, 16T]$. The respective granularity periods 221, 222, 223, 224, 225 in the set of increasing granularity periods comprise a predetermined number of consecutive values 213, i.e. they have a distinct length or duration. The distinct length of the respective granularity periods 221, 222, 223, 224, 225 may be a multiple of the length of the smallest granularity period 221. Preferably, the length or duration of each respective granularity period doubles with each granularity level, i.e. the lengths of the granularity periods may follow a geometric sequence with factor 2.

In a first step 201, an aggregated value $z_t^{nT}$ 211 is determined upon ending of a respective granularity period $nT$ of the set of increasing granularity periods. A granularity period may for example end when a next consecutive value 213 of the time series 250 is obtained. It will be apparent that a plurality of granularity periods may end simultaneously. The aggregated value 211 for a respective granularity period 221, 222, 223, 224, 225 is indicative for a statistical representation of consecutive values 213 during the respective granularity period. For example, the aggregated value $z_2^{2T}$ 218 may be determined when a granularity period 222 of length 2T ends. The aggregated value may, for example, be a mean, a cumulative sum, a median, or any other statistical representation of consecutive values 213 in the respective granularity period. For example, the aggregated values $z_t^{2T}$ 214 of granularity period 2T may be determined as

$$z_t^{2T} = (y_t + y_{t-1})/2 \qquad\qquad \text{(Eq. 1)}$$

The aggregated value 211 for a larger granularity period, e.g. $z_t^{4T}$ 215, may further be determined based on aggregated values for a smaller granularity period, e.g. $z_t^{2T}$ 214, determined during the larger granularity period as the larger granularity period includes the consecutive values 213 of the smaller granularity period. For example, the aggregated values $z_t^{4T}$ 215 of granularity period 4T may be determined as

$$z_t^{4T} = (z_t^{2T} + z_{t-2}^{2T})/2 \qquad\qquad\qquad\qquad \text{(Eq. 2)}$$

wherein $z_t^{2T}$ and $z_{t-2}^{2T}$ are determined based on consecutive values $y_{t-3}$, $y_{t-2}$, $y_{t-1}$, and $y_t$ according to Eq. 1. This allows to keep a limited amount of values in memory, i.e. the preceding aggregated value $z_{t-n}^{nT}$ for the respective granularity periods 221, 222, 223, 224, 225, rather than a history of consecutive values 213. For example, upon ending the largest granularity period in the set, i.e. 16T 225, only $y_{15}$, $y_{16}$, $z_{14}^{2T}$, $z_{12}^{4T}$, and $z_8^{8T}$ 219 are kept in memory to determine $z_{16}^{2T}$, $z_{16}^{4T}$, $z_{16}^{8T}$, and $z_{16}^{16T}$, rather than all 16 consecutive values 213.

In a next step 202, a difference value $\Delta_t^{nT}$ 230 for the respective granularity periods is determined between the aggregated value $z_t^{nT}$ 211 and the preceding aggregated value $z_{t-n}^{nT}$ for the respective granularity periods. It will be apparent that the difference value for a respective granularity period may only be determined upon ending a respective granularity period. Fig. 2 illustrates an example of difference values 232, 233, 234 for respective granularity periods 2T, 8T, and 16T of an example time series 231 having consecutive values $y_t$. The more aggregated values of larger granularity periods reduce the noise in time series 231 and therefore allow more stable trend predictions.

In a third step 203, a slope estimation $s_t^{nT}$ 240 of the time series 250 is updated for the respective granularity periods based on the difference value $\Delta_t^{nT}$ 230, the preceding slope estimation $s_{t-n}^{nT}$, and a first smoothing factor $\alpha_t$. The aggregated values for the different granularity periods represent the consecutive values of the time series at different aggregation levels, e.g. an aggregated value for a larger granularity period may represent more averaged data. As such, the first smoothing factor $\alpha_t$ can be shared amongst the slope estimations 240 for the respective granularity periods. In other words, the aggregated values of the respective granularity periods allow to use a single smoothing factor to update the respective slope estimations for the respective granularity periods. This allows to further limit memory usage.

The slope estimations 240 may express a change in the consecutive values 213 or the aggregated values 214, 215, 216, 217 over a respective granularity period. For example, slope estimation $s_8^{4T}$ may express the change in aggregated values $z_t^{4T}$ over a granularity period 4T. It will be apparent that the slope estimation 240 for a respective granularity period may only be updated upon ending a respective granularity period. The slope estimations 240 may further be updated for each granularity period in the set of granularity periods. Alternatively, the slope estimations 240 may be updated for a portion of the granularity periods in the set of granularity periods, i.e. the slope estimation 240 may not be updated for one or more granularity periods. In doing so, the consumed computational resources can be reduced by only performing the updating for granularity periods of interest.

Updating a slope estimation 240 for a respective granularity period may be based on a weighted sum of the difference value $\Delta_t^{nT}$ 230 and the preceding slope estimation $s_{t-n}^{nT}$ for the respective granularity period, wherein the weights of the terms are based on the first smoothing factor $\alpha_t$. For example, the slope estimation 240 may be updated by exponential smoothing:

$$s_t^{nT} = \alpha_t \Delta_t^{nT} + (1 - \alpha_t) s_{t-n}^{nT} \qquad\qquad\qquad\qquad \text{(Eq. 3)}$$

The first smoothing factor $\alpha_t$ may be determined such that the slope estimation 240 update biases the influence or contribution of the preceding slope estimation $s_{t-n}^{nT}$, i.e. biases previous behaviour of the time series 250. This results in a stable slope estimation 240 that is substantially unaffected by, for example, short-lived peaks. The first smoothing factor $\alpha_t$ may have a fixed value or a variable value, preferably between 0 and 1.

Updating the slope estimations 240 for the respective granularity periods 221, 222, 223, 224, 225 allows to forecast or predict different temporal patterns of the time series 250 without keeping a large amount of consecutive values 213 in memory. For example, a long-term trend of a periodic pattern with alternating periods of increasing and decreasing trends in a time series may be captured by a large granularity period, while the alternating periods of increasing and decreasing trends may be captured by a small granularity period. The slope estimations 240 further allow to determine the trends of the time series at different prediction horizons without keeping a large amount of consecutive values 213 in memory. For example, the updated slope estimation 240 for granularity period 2T may allow to determine a short-term trend 241 of time series 250, while the updated slope estimation 240 for granularity period 8T may allow to determine a long-term trend 242 of time series 250.

It is an advantage that the limited consumption of computational resources makes the computer implemented method scalable, i.e. allows online determining of trends for a plurality of time series. It is a further advantage that the memory footprint is fixed, known in advance, and/or independent of the time series. It is a further advantage that the time to process a next update of the slope estimation can be assessed in advance as the time to update a respective slope estimation is constant. It is a further advantage that trends in any time series can be determined. It is a further advantage that the determined trends adapt to new behaviour of the time series without time-consuming and resource-intensive training cycles and/or parameter tuning.

The updated slope estimations $s_t^{nT}$ 240 may further be used to extrapolate an aggregated value 211 in time. This may, for example, be achieved by adding the updated slope estimation 240 a number of times *h* to the aggregated value $z_t^{nT}$ for a respective granularity period *nT:*

$$z_{t+h}^{nT} = z_t^{nT} + hs_t^{nT} \qquad\qquad (Eq. 4)$$

This allows to predict a value 244 of the time series 250 into the future, i.e. at time t + h. The predicted value 244 may be a predicted aggregated value or a predicted consecutive value. The prediction horizon 245, i.e. the actual time between the predicted value 244 and the current value, is determined by the length of the respective granularity period. For example, adding a single slope estimation for granularity period 16T will predict a value twice as far in time as adding a single slope estimation for granularity period 8T.

The computer implemented method may further comprise detecting an alarm candidate for a respective granularity period if the extrapolated aggregated value 244 violates an alarm threshold 243. Violating an alarm threshold may include exceeding an upper threshold and/or dropping below a lower threshold. Alternatively or complementary, an alarm candidate may be detected when the slope estimation violates an alarm threshold, e.g. a maximum or minimum value for the slope estimation that will cause the time series to exceed or drop below a certain critical value.

Larger granularity periods may allow early detection of alarm candidates, while smaller granularity periods may allow more accurate detection of alarm candidates as they approach. This has the advantage that a future critical event in a time series can be predicted early and can be monitored with increasingly precise predictions as the critical event approaches. Detecting an alarm candidate may trigger an alert, e.g. a notification message that is sent to a user or operator of a network management system as described above. Alternatively or complementary, detecting an alarm candidate may trigger one or more additional steps to monitor the alarm candidate, e.g. alarm analytics, severity analysis, or additional forecasting of the time series.

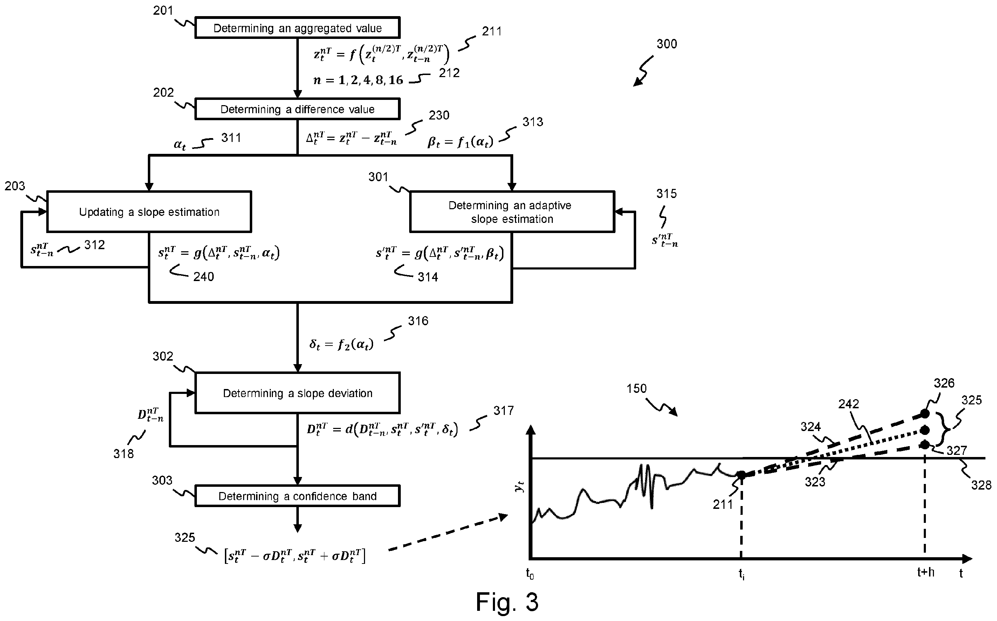

Fig. 3 shows additional steps 300 for determining a confidence band 325 of the extrapolation for respective granularity periods. The confidence band 325 may provide a range within which a future value of the time series is expected to be located according to some probability, e.g. between an upper limit 325 and a lower limit 326. In other words, the confidence band may be a measure of confidence in the determined trend 242 of the time series for a respective granularity period.

In a first 201, second 202, and third step 203, a slope estimation 240 may be updated for a respective granularity period as described above in relation to Fig. 2. The updated slope estimation 240 may be kept in memory to be used as the preceding slope estimation 312 in successive updates of the slope estimation.

In a next step 301, an adaptive slope estimation $s_t'^{nT}$ 314 for a respective granularity period may be determined in addition to the slope estimation 240. The adaptive slope estimation 314 may be based on the difference value $\Delta_t^{nT}$ 230, a preceding adaptive slope estimation $s_{t-n}'^{nT}$ 315, and a third smoothing factor $\beta_t$ 313. In particular, the adaptive slope estimation 314 for a respective granularity period may be determined based on a weighted sum of the difference value $\Delta_t^{nT}$ 230 and the preceding adaptive slope estimation $s_{t-n}'^{nT}$ 315 for the respective granularity period, wherein the weights are based on the third smoothing factor $\beta_t$ 313. For example, the adaptive slope estimation 314 may be determined by exponential smoothing:

$$s_t'^{nT} = \beta_t \Delta_t^{nT} + (1 - \beta_t)s_{t-n}'^{nT} \qquad\qquad (Eq. 5)$$

The third smoothing factor $\beta_t$ 313 may be derived from the first smoothing factor $\alpha_t$ 311. In other words, the value of the third smoothing factor $\beta_t$ 313 may be determined based on the value of the first smoothing factor $\alpha_t$ 311, e.g. by a mathematical function. As such, memory usage remains limited as only the first smoothing factor 311 is kept in memory.

The third smoothing factor $\beta_t$ 313 may be determined such that the adaptive slope estimation $s'^{nT}_t$ 314 biases the influence or contribution of the difference value $\Delta^{nT}_t$ 230 more compared to the update of the slope estimation 240. In other words, the adaptive slope estimation $s'^{nT}_t$ 314 may assign more weight to recent variations in the time series 150 such that it adapts faster than the slope estimation 240 to recent values of the time series, i.e. recent consecutive values. To this end, the third smoothing factor $\beta_t$ 313 may be substantially larger than the first smoothing factor $\alpha_t$ 311. Preferably, the third smoothing factor $\beta_t$ 313 may have a value between 0 and 1.

In a following step 302, a slope deviation $D^{nT}_t$ 317 may be determined based on the updated slope estimation 240, the determined adaptive slope estimation 314, and a second smoothing factor $\delta_t$ 316. The slope deviation $D^{nT}_t$ 317 for a respective granularity period may be indicative of the degree of fluctuation or variation in the aggregated values for a respective granularity period, i.e. to what extend more recent aggregated values vary substantially from preceding aggregated values. In other words, the respective granularity periods may have respective slope deviations $D^{nT}_t$ 317 indicative for the stability of the time series 150 at the time resolution defined by the respective granularity periods.

The slope deviation $D^{nT}_t$ 317 may be determined based on a weighted sum of the difference between the slope estimation $s^{nT}_t$ 240 and the adaptive slope estimation $s'^{nT}_t$ 314, and the preceding slope deviation $D^{nT}_{t-n}$ 318. Herein the weights of the weighted sum may be based on the second smoothing factor $\delta_t$ 316. For example, the slope deviation 317 may be determined by exponential smoothing:

$$D^{nT}_t = \delta_t abs\left(s^{nT}_t - s'^{nT}_t\right) + (1 - \delta_t)D^{nT}_{t-n} \qquad \text{(Eq. 6)}$$

The second smoothing factor $\delta_t$ 316 may be derived from the first smoothing factor $\alpha_t$ 311. In other words, the value of the second smoothing factor $\delta_t$ 316 may be determined based on the value of the first smoothing factor $\alpha_t$ 311, e.g. by a mathematical function. As such, memory usage remains limited as only the first smoothing factor 311 is kept in memory. The second smoothing factor $\delta_t$ 316 may be substantially larger than the first smoothing factor $\alpha_t$ 311 and smaller than the third smoothing factor $\beta_t$ 313. Preferably, the second smoothing factor $\delta_t$ 316 may have a value between 0 and 1.

In a final step 303, the confidence band 325 may be determined based on the slope estimation $s^{nT}_t$ 240 and the slope deviation $D^{nT}_t$ 321. The confidence band 325 may comprise a lower limit 323 and an upper limit 324, e.g. $[s^{nT}_t - \sigma D^{nT}_t, s^{nT}_t + \sigma D^{nT}_t]$, wherein $\sigma$ is a multiplication factor larger than one. A relatively wide confidence band 325 reflects a low confidence in the determined slope estimation 240, while a relatively narrow confidence band 325 reflects a high confidence in the determined slope estimation 240.

The confidence band 325 may further allow to determine an upper prediction value $P^{nT}_{up,t+h}$ 326 and a lower prediction value $P^{nT}_{low,t+h}$ 327 at timestep $t + h$ by extrapolating an aggregated value 211 based on the upper limit 324 and the lower limit 323 of the confidence band 325, respectively:

$$P^{nT}_{up,t+h} = z^{nT}_t + h(s^{nT}_t + \sigma D^{nT}_t) \qquad \text{(Eq. 7)}$$

$$P^{nT}_{low,t+h} = z^{nT}_t + h(s^{nT}_t - \sigma D^{nT}_t) \qquad \text{(Eq. 8)}$$

Alarm candidates may further be detected for a respective granularity period if the confidence band 325 violates an alarm threshold 328. The confidence band 325 may violate an alarm threshold when both the lower limit 323 and the upper limit 324 of the confidence band 325 violate the alarm threshold, i.e. a threshold for a slope value. Alternatively or complementary, the confidence band 325 may violate an alarm threshold 328 when both the lower prediction value 327 and the upper prediction value 326 at a certain prediction horizon violate an alarm threshold 328, i.e. a threshold for a time series value. In doing so, an alarm candidate may only be detected if it is sufficiently certain that a determined trend of the time series for a respective granularity period will violate the alarm threshold 328.

As such, excessive alarm candidates can be avoided. This has the advantage that alerting fatigue can be avoided, e.g. with an operator or user receiving notifications of the alarm candidates. It is a further advantage that superfluous triggering of one or more additional steps to monitor the alarm candidate, e.g. training an offline prediction model, can be avoided as these steps may consume unnecessary computational power.

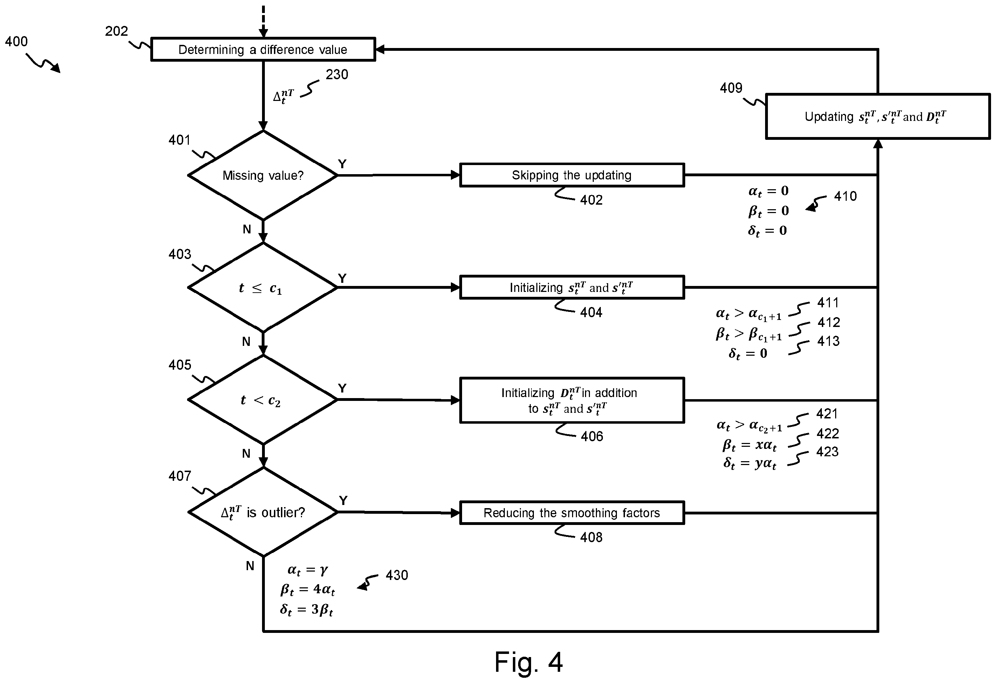

Fig. 4 shows steps 400 of the computer implemented method to determine the values of the smoothing factors $\alpha_t$, $\beta_t$, and $\delta_t$ according to embodiments. A respective granularity period $nT$ may be checked for missing values during step 401, following the determining of a difference value 230 for that granularity period, e.g. during step 202 as illustrated in Fig. 2 or 3. If at least one consecutive value of the time series is missing within the respective granularity period, updating 409 of the slope estimation for the respective granularity period may be skipped 402. This may, for example, be achieved by not performing an update 409 or by setting 410 the values of the smoothing factors $\alpha_t$, $\beta_t$, and $\delta_t$ equal to zero for the respective update 409. In doing so, an unwarranted substantial change in the determined trends can be avoided. It is a further advantage that this makes the determined trends more reliable and more robust, in particular to unprocessed data that typically includes missing datapoints.

The computer implemented method may further comprise initializing the slope estimation $S_t^{nT}$, the adaptive slope estimation $S'^{nT}_t$, and/or the slope deviation $D_t^{nT}$ during an initialization period. The initialization period may comprise a first initialization period $t_o \leq t \leq c_1$, during which the slope estimation $S_t^{nT}$ and the adaptive slope estimation $S'^{nT}_t$ may be initialized. During a second initialization period $c_1 < t \leq c_2$, the slope deviation $D_t^{nT}$ may further be initialized in addition to the slope estimations $S_t^{nT}$ and $S'^{nT}_t$. The duration of the first and second initialization periods, i.e. $c_1$ and $c_2$, may further be different for the respective granularity periods. For example, $c_1$ and $c_2$ may be determined such that a predetermined number of updates 409 are performed during the first and second initialization period for each of the granularity periods, e.g. six updates during the first initialization period and 4 updates during the second initialization period. As such, initializing the estimations for a larger granularity period may take more time compared to initializing the estimations for a smaller granularity period. The detection of alarm candidates may preferably be supressed until the initialization period is completed, as the determined trends are not yet sufficiently reliable.

If a granularity period ends during the first initialization period, i.e. at $t \leq c_1$, the slope estimation $S_t^{nT}$ and/or the adaptive slope estimation $S'^{nT}_t$ may be initialized in step 404 by performing the updating of the slope estimation and/or the adaptive slope estimation with less smoothening. This may be achieved by temporarily updating the slope estimation and/or the adaptive slope estimation with a smoothing factor 411, 412 that assigns more weight to the difference value 230 in the slope estimation update and adaptive slope estimation update. In other words, during the first initialization period, the first smoothing factor $\alpha_t$ 411 may have a value that is larger than the first smoothing factor after the first initialization period $\alpha_{c1+1}$, and the third smoothing factor $\beta_t$ 412 may have a value that is larger than the third smoothing factor after the first initialization period $\beta_{c1+1}$. This allows the initial slope estimations to adapt relatively fast and converge to a sufficiently good slope estimation within an acceptable time.

The value of the first 411 and third 412 smoothing factor may be fixed during the first initialization period. Alternatively, the smoothing factors 411, 412 may have a value that changes during the first initialization period, e.g. a value that decreases in time as the slope estimations approach a sufficiently good estimate. For example, for $t = 1, 2, 3, ..., c_1$

$$\beta_t = \alpha_t = max \left( \gamma, \alpha_{t-1} - \frac{\alpha_0 - \alpha_{c_1}}{c_1} \right) \qquad \text{(Eq. 9)}$$

wherein, for example, $c_1 = 6$, $\alpha_0 = 0.5$, $\alpha_{c1} = 0.2$, and $\gamma$ has a fixed value that is the same for all time series and all granularity periods, e.g. $\gamma = 0.005$. During the first initialization period, the second smoothing factor $\delta_t$ 413 may be set to zero such that slope deviation updates are temporarily skipped. This may avoid an excessive convergence time for the slope deviation when the initial slope estimations and adaptive slope estimations are poor.

During the second initialization period, the slope deviation $D_t^{nT}$ may be initialized 406 by performing the determining of the slope deviation with less smoothening. This may be achieved by temporarily determining the slope deviation with a smoothing factor 423 that assigns more weight to the difference between the slope estimation $s_t^{nT}$ 240 and the adaptive slope estimation $s'^{nT}_t$ 314, i.e. $abs(s_t^{nT} - s'^{nT}_t)$ in Eq. 6. In other words, during the second initialization period, the second smoothing factor $\delta_t$ 423 may have a value that is larger than the second smoothing factor after the first initialization period $\delta c_{2+1}$. This allows the initial slope deviation to converge within an acceptable time.

The value of the second smoothing factor may be fixed during the second initialization period. Alternatively, the smoothing factor may have a value that changes during the second initialization period, e.g. a value that decreases in time.

Additionally, the initializing of the slope estimations $s_t^{nT}$, $s'^{nT}_t$ may continue during the second initialization period. This can for example be achieved by setting the smoothing factors for $t = c_1 + 1, c_1 + 2, ..., c_2$

$$\alpha_t = max\left(\gamma, \alpha_{t-1} - \frac{(\alpha_{c_1} - \gamma)}{(c_2 - c_1)}\right) \qquad \text{(Eq. 10)}$$

$$\beta_t = 2\alpha_t \qquad \text{(Eq. 11)}$$

$$\delta_t = 3\alpha_t \qquad \text{(Eq. 12)}$$

wherein, for example, $c_2 = 16$, $c_1 = 6$, $\alpha_{c1} = 0{,}2$, and $\gamma = 0.005$.

The initializing in steps 404 and 406 has the advantage that the trend predictions are initialized in a streaming fashion, without loading historical time series values into memory. Alternatively, an offline initialization procedure may be performed wherein a short history of historical time series values are loaded into memory.

In a following step 407, e.g. after the initialization period, it may be assessed whether the difference value $\Delta_t^{nT}$ 230 is an outlier. Alternatively, the difference value $\Delta_t^{nT}$ 230 may be assessed to be an outlier during the first initialization period and/or during the second initialization period. Such an outlier may, for example, be caused by short-lived spikes in the consecutive values of the time series, or by a sudden shift in level of the consecutive values. An outlier may, for example, be detected when

$$\frac{abs(\rho_t^{nT} - \rho'^{nT}_t)}{D_{t-n}^{nT}} > Th_{outlier} \qquad \text{(Eq. 13)}$$

wherein $\rho_t^{nT} = \gamma\Delta_t^{nT} + (1-\gamma)s_{t-n}^{nT}$, $\rho'^{nT}_t = 4\gamma\Delta_t^{nT} + (1-4\gamma)s'^{nT}_{t-n}$, and $Th_{outlier}$ is an outlier threshold. The values for $\rho_t^{nT}$ and $\rho'^{nT}_t$ may be determined upon ending of a respective granularity period, wherein $\gamma$ has a fixed value that is the same for all time series and all granularity periods. Alternatively, an outlier may for example be detected when

$$\frac{abs(s_{t-n}^{nT} - \rho'^{nT}_t)}{D_{t-n}^{nT}} > Th_{outlier} \qquad \text{(Eq. 14)}$$

If the difference value 230 is determined to be an outlier, the updating 409 may be performed with higher smoothening, i.e. lower smoothing factors, to avoid an excessive slope estimation update caused by the large difference value 230. To this end, the updating 409 may for example be performed with the following smoothing factors

$$\alpha_t = min\left(\gamma, pow\left(10, \frac{-abs(\rho'^{nT}_t - \rho_t^{nT})}{D_{t-n}^{nT}}\right)\right) \qquad \text{(Eq. 15)}$$

$$\beta_t = 4\alpha_t \qquad \text{(Eq. 16)}$$

$$\delta_t = 3\alpha_t \qquad\qquad\qquad (Eq.\ 17)$$

As such, the magnitude of the outlier may influence the smoothing factor thereby resulting in more smoothening for outliers relatively far from the outlier threshold $Th_{outlier}$ and less smoothing for outliers relatively close to the outlier threshold. Upon detecting a plurality of successive outliers, e.g. at least six outliers, the initializing in steps 404 and/or 406 may further be repeated to recalibrate the slope estimation, the adaptive slope estimation, and/or the slope deviation. This has the further advantage that the determined trends can adapt to substantially new behaviour of the time series, i.e. a change in time series behaviour.

Else, if the difference value 230 is not determined to be an outlier in step 407, regular updating 409 of the slope estimation, adaptive slope estimation, and slope deviation may be performed. This can, for example, be achieved by updating 409 with the following smoothing factors 430

$$\alpha_t = \gamma \qquad\qquad\qquad (Eq.\ 18)$$

$$\beta_t = 4\alpha_t \qquad\qquad\qquad (Eq.\ 19)$$

$$\delta_t = 3\alpha_t \qquad\qquad\qquad (Eq.\ 20)$$

wherein $\gamma$ has a fixed value that is the same for all time series and all granularity periods, e.g. $\gamma = 0.005$.

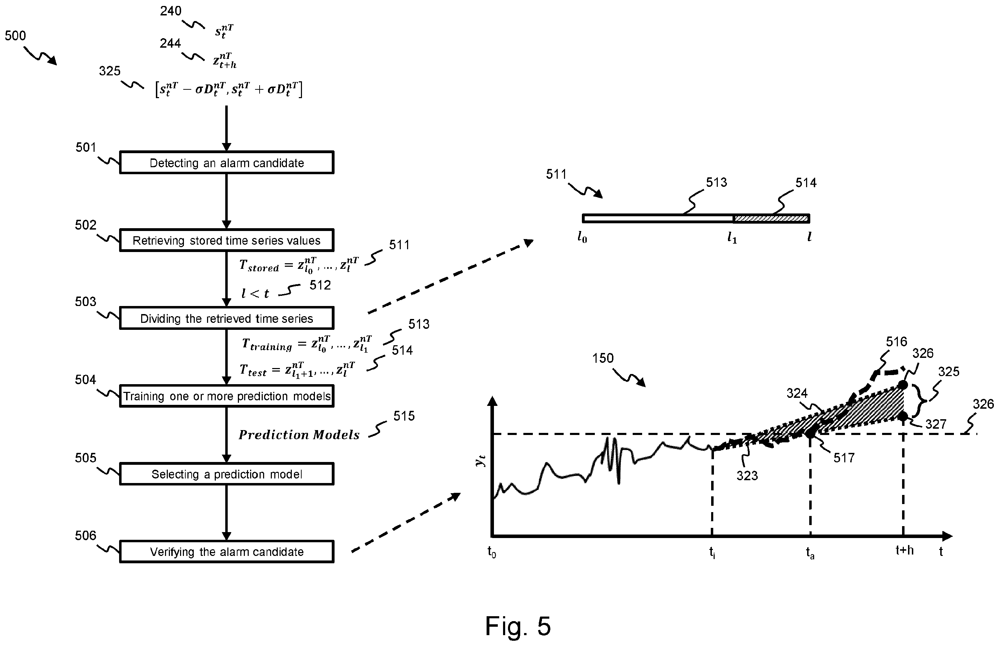

Fig. 5 shows additional steps 500 of the computer implemented method for training one or more prediction models to verify a detected alarm candidate, according to embodiments. In a first step 501, an alarm candidate may be detected based on the slope estimation 240, an extrapolated aggregated value 244, and/or a confidence band 325, as discussed in relation to Fig. 2 and Fig. 3 above.

Upon detecting the alarm candidate, one or more prediction models may be trained or generated based on previous stored time series values. In contrast to the determining of trends as described in relation to Fig. 2, Fig. 3, and Fig. 4, these prediction models do not receive their inputs in a streaming fashion but use a history of time series data. In other words, detecting an alarm candidate based on online trend determining may trigger an offline generation or training of one or more prediction models. Such a prediction model may forecast or predict the time series more accurately compared to the online determined trends at the cost of additional computational resources. It is thus an advantage that these more expensive prediction models are only obtained when needed and are not continuously kept in memory for continuous updating and/or predicting.

In an initial step 502 of model training, a sequence of stored time series values 511 may be retrieved from storage, e.g. from a database. Time series values may be stored at different time resolutions, i.e. different granularity levels. For example, the last year of hourly averaged data, the last month of five minutes averaged data, and the last day of real time data may be stored for a time series. These time resolutions or granularity levels may correspond with the respective granularity periods $nT$. In other words, values of the time series aggregated according to the respective granularity periods may be stored in memory. Stored time series values may be retrieved at an appropriate time resolution depending on which granularity period triggered the alarm candidate.

Alternatively, the time resolutions of the stored time series values 511 may not correspond with the respective granularity periods. In this case, the time resolution of the retrieved time series values may be aggregated to the respective granularity period for which the alarm candidate is detected. This has the further advantage that some noise may be removed and that the training time may be reduced by a shorter training sequence. The training may further comprise additional pre-processing of the retrieved time series values such as for example, amongst others, removing outliers, detecting missing values, detecting if the values are multiplicative, detecting if sufficient training data is stored to train a valid model, and/or detecting seasonality.

In a following step 503, the retrieved time series values 511 may be divided or split in a training set 513 and a test set 514. The training set 513 may be used as training data to train the one or more prediction models 515. The test set 514 may be used as validation data to evaluate the performance of the trained prediction models 515. The test set 514 may comprise the most recent values of the retrieved time series values 511. The test set 514 may preferably comprise at most 20% of the retrieved time series values, more preferably at most 10%. Preferably, at least half of the values in the test set 514 may not be missing values.

In a following step 504, one or more prediction models 515 may be trained based on the training set 513. Preferably, a plurality of prediction models 515 may be trained, wherein the respective prediction models are based on different modelling techniques such as, for example, a Holt-Winters model, an autoregressive model, a moving average model, a Markov model, a non-linear model, or any other model for time series forecasting known to the skilled person. The training of the one or more prediction models may further be performed in parallel, i.e. substantially simultaneously.

In a following step 505, a forecast of the test set 514 may be obtained for each of the trained prediction models 515. Comparing the obtained forecast to the test set 514 allows to determine a prediction error for each of the trained prediction models 515. The prediction model that predicts the test set 514 with the smallest error, e.g. the lowest sum of absolute prediction errors, may then be selected. In doing so, the modelling technique that is most suitable for predicting the current time series can be obtained. This is an advantage as the most suitable modelling technique may vary between different time series.

The selected prediction model may then be used to verify the detected alarm candidate 517 by predicting the time series values in time 516. Only if the detected alarm candidate is confirmed by the prediction model, an operator or user may be alerted of the pending alarm candidate. Additionally, the selected prediction model may predict a time interval, e.g. $[t_a - \mu, t_a + \mu]$, during which the alarm candidate 517 is expected to occur.

Following the detection of a first alarm candidate, an increasing number of prediction models may be triggered for the different granularity periods by subsequent consecutive values of the time series. This can result in a more accurate prediction as the alarm candidate approaches, allowing to provide a user or operator with more precise alerts. To avoid an excess of expensive model training, a prediction model for a respective granularity period may only be retrained after a minimum amount of next consecutive values has been obtained. The prediction models may be kept in memory, e.g. a cache memory, as long as new predictions or retraining is triggered. When the time interval between prediction or training requests exceeds a maximum value, the prediction model may be removed from memory.

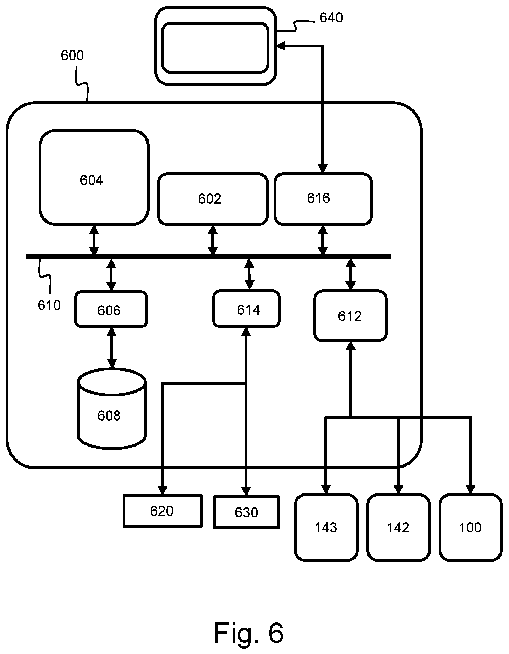

Fig. 6 shows a suitable computing system 600 enabling to implement embodiments of the above described method according to the invention. Computing system 600 may in general be formed as a suitable general-purpose computer and comprise a bus 610, a processor 602, a local memory 604, one or more optional input interfaces 614, one or more optional output interfaces 616, a communication interface 612, a storage element interface 606, and one or more storage elements 608. Bus 610 may comprise one or more conductors that permit communication among the components of the computing system 600. Processor 602 may include any type of conventional processor or microprocessor that interprets and executes programming instructions. Local memory 604 may include a random-access memory (RAM) or another type of dynamic storage device that stores information and instructions for execution by processor 602 and/or a read only memory (ROM) or another type of static storage device that stores static information and instructions for use by processor 602. Input interface 614 may comprise one or more conventional mechanisms that permit an operator or user to input information to the computing device 600, such as a keyboard 620, a mouse 630, a pen, voice recognition and/or biometric mechanisms, a camera, etc. Output interface 616 may comprise one or more conventional mechanisms that output information to the operator or user, such as a display 640, etc. Communication interface 612 may comprise any transceiver-like mechanism such as for example one or more Ethernet interfaces that enables computing system 600 to communicate with other devices and/or systems such as for example, amongst others, a data server 143, a control device 142, or a telecommunications network 100. The communication interface 612 of computing system 600 may be connected to such another computing system by means of a local area network (LAN) or a wide area network (WAN) such as for example the internet. Storage element interface 606 may comprise a storage interface such as for example a Serial Advanced Technology Attachment (SATA) interface or a Small Computer System Interface (SCSI) for connecting bus 610 to one or more storage elements 608, such as one or more local disks, for example SATA disk drives, and control the reading and writing of data to and/or from these storage elements 608. Although the storage element(s) 608 above is/are described as a local disk, in general any other suitable computer-readable media such as a removable magnetic disk, optical storage media such as a CD or DVD, - ROM disk, solid state drives, flash memory cards, etc. could be used.

Although the present disclosure has been illustrated by reference to specific embodiments, it will be apparent to those skilled in the art that the invention is not limited to the details of the foregoing illustrative embodiments. The invention is limited by the appended claims. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1.  A computer implemented method (200) for predicting future alarm threshold breaches in a network based on a time series of a network metric indicative for a state of a node within the network by determining trends of the time series

(150) at different time resolutions; wherein the time series has consecutive values (213) at an initial time resolution, and wherein the initial time resolution defines a smallest granularity period (221) of a set of increasing granularity periods (221, 222, 223, 224, 225) within the time series; the method comprising, upon ending of a respective granularity period of the set of increasing granularity periods:

- determining (201) an aggregated value (211) indicative for a statistical representation of consecutive values during the respective granularity period;
- determining (202) a difference value (230) between the aggregated value and a preceding aggregated value; and
- updating (203) a slope estimation (240) of the time series for the respective granularity period based on the difference value, a preceding slope estimation, and a first smoothing factor shared amongst slope estimations (241, 242) for the respective granularity periods.

2. The computer implemented method according to claim 1, further comprising, for respective granularity periods, extrapolating (241, 242) the aggregated value (211) a number of granularity periods in time based on the slope estimation (240).

3. The computer implemented method according to claim 2, further comprising detecting an alarm candidate for a respective granularity period if the slope estimation (240) and/or the extrapolated aggregated value (241, 242) violates an alarm threshold (243).

4. The computer implemented method according to claim 2, wherein extrapolating the aggregated value for respective granularity periods further comprises determining (303) a confidence band (325) of the extrapolation (242) based on the slope estimation (240) and a slope deviation (321) indicative for the stability of the time series.

5. The computer implemented method according to claim 4, further comprising determining (302) the slope deviation based on a preceding slope deviation (318), a second smoothing factor (316) derived from the first smoothing factor, the slope estimation (240), and an adaptive slope estimation (314) indicative for the contribution of the recent time series values to the trend of the time series.

6. The computer implemented method according to claim 5, further comprising determining (301) the adaptive slope estimation (314) based on the difference value (230), a preceding adaptive slope estimation (315), and a third smoothing factor (313) derived from the first smoothing factor.

7. The computer implemented method according to any of claims 4 - 6, further comprising detecting an alarm candidate for a respective granularity period if the confidence band (325) violates an alarm threshold (326).

8. The computer implemented method according to any of the preceding claims, further comprising initializing (404) the slope estimation by, during an initialization period, performing the updating (409) of the slope estimation with less smoothening than with the first smoothing factor.

9. The computer implemented method according to any of the preceding claims, further comprising performing the updating of the slope estimation for a respective granularity period with more smoothening than with the first smoothing factor if the difference value is an outlier.

10. The computer implemented method according to claim 3 or 7, further comprising, upon detecting (501) an alarm candidate for a respective granularity period, training (504) one or more prediction models 515 based on previous stored time series values (511).

11. The computer implemented method according to claim 10, wherein training the one or more prediction models comprises:

- retrieving (502) stored time series values (511) having a time resolution comparable to the respective granularity period of the detected alarm candidate;
- dividing (503) the retrieved time series values in a training set (513) and a test set (514);
- training (504) one or more prediction models based on the training set; and
- selecting (505) a prediction model from the one or more trained prediction models (515) that predicts the test set with the smallest error.

12. The computer implemented method according to claim 10 or 11, further comprising verifying (506) the detected alarm candidate by predicting the time series values in time (516) based on the one or more prediction models.

13. A data processing system configured to perform the computer implemented method according to any one of claims 1 to 12.

14. A computer program comprising instructions which, when the program is executed by a computer, cause the computer to perform the computer implemented method according to any one of claims 1 to 12.

15. A computer-readable medium comprising instructions which, when executed by a computer, cause the computer to perform the computer implemented method according to any one of claims 1 to 12.

**Patentansprüche**

1. Computerimplementiertes Verfahren (200) zum Vorhersagen zukünftiger Alarmschwellenübertretungen in einem Netzwerk basierend auf einer Zeitreihe einer Netzwerkmetrik, die einen Zustand eines Knotens innerhalb des Netzwerks angibt, durch Bestimmen von Trends der Zeitreihe (150) bei unterschiedlichen Zeitauflösungen; wobei die Zeitreihe aufeinanderfolgende Werte (213) bei einer anfänglichen Zeitauflösung aufweist und wobei die anfängliche Zeitauflösung eine kleinste Granularitätsperiode (221) eines Satzes von zunehmenden Granularitätsperioden (221, 222, 223, 224, 225) innerhalb der Zeitreihe definiert; wobei das Verfahren nach Beendigung einer jeweiligen Granularitätsperiode des Satzes von zunehmenden Granularitätsperioden Folgendes umfasst:

   - Bestimmen (201) eines aggregierten Werts (211), der eine statistische Darstellung aufeinanderfolgender Werte während der jeweiligen Granularitätsperiode angibt;
   - Bestimmen (202) eines Differenzwerts (230) zwischen dem aggregierten Wert und einem vorhergehenden aggregierten Wert; und
   - Aktualisieren (203) einer Steigungsschätzung (240) der Zeitreihe für die jeweilige Granularitätsperiode basierend auf dem Differenzwert, einer vorhergehenden Steigungsschätzung und einem ersten Glättungsfaktor, der den Steigungsschätzungen (241, 242) für die jeweiligen Granularitätsperioden gemeinsam ist.

2. Computerimplementiertes Verfahren nach Anspruch 1, ferner umfassend, für jeweilige Granularitätsperioden, Extrapolieren (241, 242) des aggregierten Werts (211) eine Anzahl von Granularitätsperioden in der Zeit basierend auf der Steigungsschätzung (240).

3. Computerimplementiertes Verfahren nach Anspruch 2, ferner umfassend Erkennen eines Alarmkandidaten für eine jeweilige Granularitätsperiode, falls die Steigungsschätzung (240) und/oder der extrapolierte aggregierte Wert (241, 242) eine Alarmschwelle (243) verletzt.

4. Computerimplementiertes Verfahren nach Anspruch 2, wobei das Extrapolieren des aggregierten Werts für jeweilige Granularitätsperioden ferner Bestimmen (303) eines Konfidenzbands (325) der Extrapolation (242) basierend auf der Steigungsschätzung (240) und einer Steigungsabweichung (321), die die Stabilität der Zeitreihe angibt, umfasst.

5. Computerimplementiertes Verfahren nach Anspruch 4, ferner umfassend Bestimmen (302) der Steigungsabweichung basierend auf einer vorhergehenden Steigungsabweichung (318), einem zweiten Glättungsfaktor (316), der aus dem ersten Glättungsfaktor abgeleitet ist, der Steigungsschätzung (240) und einer adaptiven Steigungsschätzung (314), die den Beitrag der jüngsten Zeitreihenwerte zu dem Trend der Zeitreihe angibt.

6. Computerimplementiertes Verfahren nach Anspruch 5, ferner umfassend Bestimmen (301) der adaptiven Steigungsschätzung (314) basierend auf dem Differenzwert (230), einer vorhergehenden adaptiven Steigungsschätzung (315) und einem dritten Glättungsfaktor (313), der von dem ersten Glättungsfaktor abgeleitet ist.

7. Computerimplementiertes Verfahren nach einem der Ansprüche 4-6, ferner umfassend Erkennen eines Alarmkandidaten für eine jeweilige Granularitätsperiode, falls das Konfidenzband (325) eine Alarmschwelle (326) verletzt.

8. Computerimplementiertes Verfahren nach einem der vorhergehenden Ansprüche, ferner umfassend Initialisieren (404) der Steigungsschätzung durch, während einer Initialisierungsperiode, Durchführen des Aktualisierens (409) der Steigungsschätzung mit weniger Glättung als mit dem ersten Glättungsfaktor.

9. Computerimplementiertes Verfahren nach einem der vorhergehenden Ansprüche, ferner umfassend Durchführen des Aktualisierens der Steigungsschätzung für eine jeweilige Granularitätsperiode mit mehr Glättung als mit dem ersten Glättungsfaktor, falls der Differenzwert ein Ausreißer ist.

10. Computerimplementiertes Verfahren nach Anspruch 3 oder 7, ferner umfassend, nach Erkennen (501) eines Alarmkandidaten für eine jeweilige Granularitätsperiode, Trainieren (504) eines oder mehrerer Vorhersagemodelle 515 basierend auf vorherigen gespeicherten Zeitreihenwerten (511).

11. Computerimplementiertes Verfahren nach Anspruch 10, wobei das Trainieren des einen oder der mehreren Vorhersagemodelle Folgendes umfasst:

   - Abrufen (502) gespeicherter Zeitreihenwerte (511) mit einer Zeitauflösung, die mit der jeweiligen Granularitätsperiode des erkannten Alarmkandidaten vergleichbar ist;
   - Teilen (503) der abgerufenen Zeitreihenwerte in einen Trainingssatz (513) und einen Testsatz (514);
   - Trainieren (504) eines oder mehrerer Vorhersagemodelle basierend auf dem Trainingssatz; und
   - Auswählen (505) eines Vorhersagemodells aus dem einen oder den mehreren trainierten Vorhersagemodellen (515), das den Testsatz mit dem kleinsten Fehler vorhersagt.

12. Computerimplementiertes Verfahren nach Anspruch 10 oder 11, ferner umfassend Verifizieren (506) des erkannten Alarmkandidaten durch Vorhersagen der Zeitreihenwerte in der Zeit (516) basierend auf dem einen oder den mehreren Vorhersagemodellen.

13. Datenverarbeitungssystem, dazu konfiguriert, das computerimplementierte Verfahren nach einem der Ansprüche 1 bis 12 durchzuführen.

14. Computerprogramm, umfassend Anweisungen, die, wenn das Programm durch einen Computer ausgeführt wird, bewirken, dass der Computer das computerimplementierte Verfahren nach einem der Ansprüche 1 bis 12 durchführt.

15. Computerlesbares Medium, Anweisungen umfassend, die, wenn sie durch einen Computer ausgeführt werden, bewirken, dass der Computer das computerimplementierte Verfahren nach einem der Ansprüche 1 bis 12 durchführt.

## Revendications

1. Procédé mis en œuvre par ordinateur (200) permettant de prédire des futures violations de seuil d'alarme dans un réseau sur la base d'une série temporelle d'une métrique de réseau indiquant un état d'un nœud dans le réseau en déterminant les tendances de la série temporelle (150) à différentes résolutions temporelles ; ladite série temporelle possédant des valeurs consécutives (213) à une résolution temporelle initiale, et ladite résolution temporelle initiale définissant une période de granularité la plus petite (221) d'un ensemble de périodes de granularité croissantes (221, 222, 223, 224, 225) dans la série temporelle ; le procédé comprenant, à la fin d'une période de granularité respective de l'ensemble de périodes de granularité croissantes :

   - la détermination (201) d'une valeur agrégée (211) indiquant une représentation statistique de valeurs consécutives durant la période de granularité respective ;
   - la détermination (202) d'une valeur de différence (230) entre la valeur agrégée et une valeur agrégée précédente ; et
   - la mise à jour (203) d'une estimation de pente (240) de la série temporelle pour la période de granularité respective sur la base de la valeur de différence, d'une estimation de pente précédente et d'un premier facteur de lissage partagé entre les estimations de pente (241, 242) pour les périodes de granularité respectives.

2. Procédé mis en œuvre par ordinateur selon la revendication 1, comprenant en outre, pour des périodes de granularité respectives, l'extrapolation (241, 242) de la valeur agrégée (211) un nombre de périodes de granularité dans le temps sur la base de l'estimation de pente (240).

3. Procédé mis en œuvre par ordinateur selon la revendication 2, comprenant en outre la détection d'un candidat d'alarme pour une période de granularité respective si l'estimation de pente (240) et/ou la valeur agrégée extrapolée (241, 242) viole un seuil d'alarme (243).

4. Procédé mis en œuvre par ordinateur selon la revendication 2, ladite extrapolation de la valeur agrégée pour des périodes de granularité respectives comprenant en outre la détermination (303) d'une bande de confiance (325) de l'extrapolation (242) sur la base de l'estimation de pente (240) et d'un écart de pente (321) indiquant la stabilité de la série temporelle.

5. Procédé mis en œuvre par ordinateur selon la revendication 4, comprenant en outre la détermination (302) de l'écart de pente sur la base d'un écart de pente précédent (318), d'un second facteur de lissage (316) dérivé du premier facteur de lissage, de l'estimation de pente (240) et d'une estimation de pente adaptative (314) indiquant la contribution des valeurs de série temporelle récentes à la tendance de la série temporelle.

6. Procédé mis en œuvre par ordinateur selon la revendication 5, comprenant en outre la détermination (301) de l'estimation de pente adaptative (314) sur la base de la valeur de différence (230), d'une estimation de pente adaptative précédente (315) et d'un troisième facteur de lissage (313) dérivé du premier facteur de lissage.

7. Procédé mis en œuvre par ordinateur selon l'une quelconque des revendications 4 à 6, comprenant en outre la détection d'un candidat d'alarme pour une période de granularité respective si la bande de confiance (325) viole un seuil d'alarme (326).

8. Procédé mis en œuvre par ordinateur selon l'une quelconque des revendications précédentes, comprenant en outre l'initialisation (404) de l'estimation de pente par la réalisation, durant une période d'initialisation, la réalisation de la mise à jour (409) de l'estimation de pente avec moins de lissage qu'avec le premier facteur de lissage.

9. Procédé mis en œuvre par ordinateur selon l'une quelconque des revendications précédentes, comprenant en outre la réalisation de la mise à jour de l'estimation de pente pour une période de granularité respective avec plus de lissage qu'avec le premier facteur de lissage si la valeur de différence est une valeur aberrante.

10. Procédé mis en œuvre par ordinateur selon la revendication 3 ou 7, comprenant en outre, lors de la détection (501) d'un candidat d'alarme pour une période de granularité respective, l'entraînement (504) d'un ou plusieurs modèles de prédiction 515 sur la base de valeurs de séries temporelles stockées précédentes (511).

11. Procédé mis en œuvre par ordinateur selon la revendication 10, ledit entraînement dudit ou desdits modèles de prédiction comprenant :

   - la récupération (502) de valeurs de série temporelle stockées (511) possédant une résolution temporelle comparable à la période de granularité respective du candidat d'alarme détecté ;
   - la division (503) des valeurs de série temporelle récupérées dans un ensemble d'entraînement (513) et un ensemble d'essai (514) ;
   - l'entraînement (504) d'un ou plusieurs modèles de prédiction sur la base de l'ensemble d'entraînement ; et
   - la sélection (505) d'un modèle de prédiction parmi le ou les modèles de prédiction entraînés (515) qui prédit l'ensemble d'essai avec la plus petite erreur.

12. Procédé mis en œuvre par ordinateur selon la revendication 10 ou 11, comprenant en outre la vérification (506) du candidat d'alarme détecté en prédisant les valeurs de série temporelle dans le temps (516) sur la base du ou des modèles de prédiction.

13. Système de traitement de données configuré pour réaliser le procédé mis en œuvre par ordinateur selon l'une quelconque des revendications 1 à 12.

14. Programme informatique comprenant des instructions qui, lorsque le programme est exécuté par un ordinateur, amènent l'ordinateur à réaliser le procédé mis en œuvre par ordinateur selon l'une quelconque des revendications 1 à 12.

15. Support lisible par ordinateur comprenant des instructions qui, lorsqu'elles sont exécutées par un ordinateur, amènent l'ordinateur à réaliser le procédé mis en œuvre par ordinateur selon l'une quelconque des revendications 1 à 12.

Fig. 1

Fig. 2

**201** Determining an aggregated value

$$z_t^{nT} = f\left(z_t^{(n/2)T}, z_{t-n}^{(n/2)T}\right)$$ **211**

$$n = 1, 2, 4, 8, 16$$ **212**

**300**

**202** Determining a difference value

$$\alpha_t$$ **311**    $$\Delta_t^{nT} = z_t^{nT} - z_{t-n}^{nT}$$ **230**    $$\beta_t = f_1(\alpha_t)$$ **313**

**203** Updating a slope estimation

**301** Determining an adaptive slope estimation    **315**

$$s_{t-n}^{nT}$$ **312**    $$s_t^{nT} = g\left(\Delta_t^{nT}, s_{t-n}^{nT}, \alpha_t\right)$$ **240**

$$s_t'^{nT} = g\left(\Delta_t^{nT}, s_{t-n}'^{nT}, \beta_t\right)$$ **314**    $$s_{t-n}'^{nT}$$

$$\delta_t = f_2(\alpha_t)$$ **316**

**302** Determining a slope deviation

$$D_{t-n}^{nT}$$ **318**    $$D_t^{nT} = d\left(D_{t-n}^{nT}, s_t^{nT}, s_t'^{nT}, \delta_t\right)$$ **317**

**303** Determining a confidence band

**325** $$\left[s_t^{nT} - \sigma D_t^{nT}, s_t^{nT} + \sigma D_t^{nT}\right]$$

**150**    **326**    **325**    **324**    **242**    **323**    **327**    **328**

$$y_t$$    **211**

$$t_0$$    $$t_i$$    $$t+h$$    $$t$$

## Fig. 3

400

202 — Determining a difference value

230 — $\Delta_t^{nT}$

401 — Missing value?
- Y → 402 — Skipping the updating → 410: $\alpha_t = 0$; $\beta_t = 0$; $\delta_t = 0$
- N ↓

403 — $t \leq c_1$
- Y → 404 — Initializing $s_t^{nT}$ and $s_t'^{nT}$ → 411: $\alpha_t > \alpha_{c_1+1}$; 412: $\beta_t > \beta_{c_1+1}$; 413: $\delta_t = 0$
- N ↓

405 — $t < c_2$
- Y → 406 — Initializing $D_t^{nT}$ in addition to $s_t^{nT}$ and $s_t'^{nT}$ → 421: $\alpha_t > \alpha_{c_2+1}$; 422: $\beta_t = x\alpha_t$; 423: $\delta_t = y\alpha_t$
- N ↓

407 — $\Delta_t^{nT}$ is outlier?
- Y → 408 — Reducing the smoothing factors → 430: $\alpha_t = \gamma$; $\beta_t = 4\alpha_t$; $\delta_t = 3\beta_t$
- N ↓

409 — Updating $s_t^{nT}$, $s_t'^{nT}$ and $D_t^{nT}$

Fig. 4

21

Fig. 5

Fig. 6

EP 4 307 633 B1

**EP 4 307 633 B1**

REFERENCES CITED IN THE DESCRIPTION

**Patent documents cited in the description**

- EP 3401789 A1